# FASCICULE DE BREVET EUROPEEN

(11) **EP 4 288 355 B1**
(45) Date de publication et mention de la délivrance du brevet: **22.01.2025**
(21) Numéro de dépôt: 22702736.4
(22) Date de dépôt: 01.02.2022
(51) Int. Cl.: B65G 1/04, B65G 1/02

(54) **PROCÉDÉ DE FOURNITURE AUTOMATISÉ ET MAGASIN AUTOMATIQUE ROBOTISÉ**
AUTOMATISIERTES VERSORGUNGSVERFAHREN UND AUTOMATISIERTES ROBOTERGESTÜTZTES LAGER
AUTOMATED SUPPLY METHOD AND AUTOMATED ROBOT-ASSISTED WAREHOUSE

(30) Priorité: 08.02.2021 FR 2101190
(43) Date de publication de la demande: 13.12.2023
(73) Titulaire: Roxane, 34980 Saint-Gely-du-Fesc (FR)
(72) Inventeur: SOLIGNAC, Jean-Pierre, 34270 SAINT MATHIEU DE TREVIERS (FR)
(74) Mandataire: Cornuejols, Georges
(86) Numéro de dépôt international: PCT/EP2022/052346
(87) Numéro de publication internationale: WO 2022/167418

(56) Documents cités:
- EP-A1- 0 169 156
- WO-A1-2017/109303
- US-A1- 2008 152 466
- US-A1- 2012 029 687
- US-B1- 7 381 022

## Description

### DOMAINE TECHNIQUE DE L'INVENTION

La présente invention vise un procédé de fourniture automatisé et un magasin automatique robotisé. La présente invention est du domaine des matériels et des techniques utilisés pour le stockage et le déstockage dans la distribution ou la fabrication de produits manufacturés. Elle s'applique, notamment, au stockage et à la distribution de pièces détachées ou produits unitaires, en particulier des produits vendus à distance, aux distributeurs automatiques ou à l'archivage de livres et documents en bibliothèques.

### ÉTAT DE LA TECHNIQUE

Les magasins automatisés connus de l'état de la technique comprennent des rayonnages agencés en rangées parallèles définissant des cellules de stockage identifiées par un système informatique. Ces rayonnages s'étendent aussi bien en hauteur qu'en longueur et les cellules de stockage sont définies par des emplacements occupés par des parties d'étagères ou des tiroirs de stockage des objets. Les coordonnées de chaque cellule d'une même rangée peuvent être ainsi définies par une altitude par rapport au sol et par une distance à partir d'une origine associée à la rangée correspondante. Les rayonnages sont généralement disposés par paires, dos à dos. Ces différentes rangées sont régulièrement écartées les unes des autres afin de définir des couloirs de circulation de robots manipulateurs commandés à distance par le système informatique. Ces robots manipulateurs comprennent, chacun, un bras de préhension déplaçable selon les trois axes de l'espace pour être amené face à une cellule soit pour y déposer un objet à stocker soit pour y prélever un objet. Ces objets peuvent être des éléments palettisés.

Du fait de la dimension des rangées, les robots manipulateurs sont lents et les délais de dépose ou de prise d'un objet sont trop importants.

On connait la demande de brevet US 2012/029687 qui montre le préambule des revendications 1 et 11. La demande de US 2008/152466 et le brevet US 7 381 022 qui divulguent des rayonnages munis de chariots mobiles, chaque chariot se déplaçant horizontalement et verticalement jusqu'à un unique convoyeur placé au-dessus ou en dessous d'étagères comportant des bacs. Cependant, le temps de trajet de chaque chariot est long et augmente le temps de préparation de chaque colis. En effet, un nouveau colis ne peut être préparé qu'une fois que le colis précédent est terminé.

### PRÉSENTATION DE L'INVENTION

La présente invention vise à remédier à tout ou partie de ces inconvénients.

À cet effet, la présente invention vise, selon un premier aspect, un magasin automatique robotisé, qui comporte :
- au moins deux supports fixes horizontaux de retenue en position d'une pluralité de bacs comportant des produits à délivrer, chaque support fixe horizontal étant à une hauteur dite « de support fixe »,
- au moins un convoyeur configuré pour supporter au moins un bac en mouvement horizontal, chaque convoyeur étant positionné à une hauteur de convoyage différente de chaque hauteur de support fixe, au moins un convoyeur étant positionné entre deux supports fixes horizontaux et
- au moins un chariot mobile muni d'une tête de préhension et d'un moteur de mise en déplacement de la tête de préhension, configurée pour prendre un bac unique sur un support de bac, le déplacer verticalement jusqu'à une hauteur de convoyage et lier mécaniquement le bac déplacé au convoyeur placé à cette hauteur de convoyage.

Grâce à ces dispositions, la prise et la mise sur convoyeur de chaque bac est très rapide puisque la tête de préhension et le bac effectuent des mouvements de faible amplitude, essentiellement verticaux. Le magasin objet de l'invention peut ainsi fournir un grand nombre de pièces ou produits par unité de temps, par exemple, par heure.

Dans des modes de réalisation, au moins un bac présente, du côté tourné vers la tête de préhension, un bord replié vers le bas formant un volume ouvert, et la tête de préhension comporte un support de bac présentant une partie supérieure configurée pour pénétrer dans le repliement de ce bord du bac.

Grâce à ces dispositions, un simple mouvement réalisé par la tête de préhension consistant en un positionnement de cette partie supérieure en dessous de ce bord du bac puis de montée, suffit à faire prendre le bac par le chariot mobile. La vitesse de fonctionnement du chariot mobile, et donc du magasin, est ainsi particulièrement élevée.

Dans des modes de réalisation, au moins un bac présente, du côté tourné vers le support fixe, un bord replié vers le bas formant un volume ouvert, et le support fixe comporte une traverse présentant une partie supérieure configurée pour pénétrer dans le repliement de ce bord du bac.

Grâce à ces dispositions, un simple mouvement du bac consistant en un positionnement de ce bord plié au-dessus de la partie de la traverse du support fixe puis en une descente du bac, suffit à faire retenir le bac par le support fixe. Ce mouvement est réalisé par la tête de préhension qui porte un bac. La vitesse de fonctionnement du chariot mobile, et donc du magasin, est ainsi particulièrement élevée.

Dans des modes de réalisation, le magasin automatique robotisé comporte au moins deux convoyeurs horizontaux et, entre deux convoyeurs successifs, deux supports fixes, chaque convoyeur horizontal étant entouré, au-dessus et en dessous, par deux supports fixes.

Ainsi, chaque convoyeur peut être associé à deux supports fixes immédiatement au-dessus et en dessous de ce convoyeur, ce qui limite la durée des déplacements de la tête de préhension pour prendre un bac et le lier au convoyeur.

Dans des modes de réalisation, le magasin automatique robotisé comporte un bras motorisé à l'extrémité de chaque convoyeur où le convoyeur amène chaque bac, le bras motorisé étant configuré pour prendre chaque bac sur chaque convoyeur pour lier ce bac à un convoyeur secondaire.

Grâce à ces dispositions, les bacs sortant du magasin, par l'intermédiaire des convoyeurs intercalés avec des supports fixes, sont mis à disposition d'un opérateur ou d'une machine en vue de leur emballage ou de la fabrication de produits manufacturés.

Dans des modes de réalisation, le bras motorisé effectue une rotation de chaque bac.

Grâce à ces dispositions, le mouvement du bras motorisé peut être rapide et le convoyeur secondaire peut se trouver en dehors du plan des convoyeurs intercalés avec les supports fixes.

Dans des modes de réalisation, le magasin automatique robotisé comporte un moyen de commande du trajet du chariot mobile parallèlement au plan des supports fixes, pour, en fonction des bacs à faire sortir, déterminer un chemin suivi par le chariot mobile, ledit chemin suivant successivement les différents supports fixes portant lesdits bacs à faire sortir.

Les inventeurs ont déterminé que ce type de chemin permet une augmentation du rythme de sortie des bacs, par rapport à un chemin dans lequel le chariot mobile fait des allers et retours entre des positions de préhension de bacs sur différents supports fixes.

Dans des modes de réalisation, le chariot mobile comporte un moyen de reconnaissance automatique d'au moins un produit présent dans un bac.

Grâce à ces dispositions, une éventuelle erreur de correspondance entre un bac et un produit qui est placé dans ce bac est repéré directement par le magasin automatique robotisé. Ceci limite les opérations postérieures à la sortie du magasin, manuelles ou par des systèmes tiers, qui augmenteraient la complexité de prise en compte des erreurs.

La reconnaissance automatique peut être réalisée, par exemple, par une caméra et/ou par pesée de précision. En cas d'utilisation d'une caméra, le traitement des images qu'elle fournit peut comporter le repérage, en deux ou trois dimensions, de la position d'un produit dans un casier. Cette position peut ensuite être utilisée par un organe de préhension (« picking ») pour saisir le produit.

Dans des modes de réalisation, le chariot mobile comporte un organe de pesée dont la précision est plus fine que le poids unitaire du produit le plus léger dans le magasin.

On réalise ainsi un contrôle de stock automatique pondéral à chaque sortie de casier, avec une mémorisation d'un nombre de produits et/ou une mémorisation du poids résiduel des produits dans le casier.

Dans des modes de réalisation, le magasin automatique robotisé comporte, de plus, un convoyeur de reprise de bacs vides jusqu'à une zone de stockage de bacs vides.

Grâce à ces dispositions, en dehors des périodes de fourniture de produits, les bacs vides peuvent être regarnis de produits et remis sur les supports fixes, par exemple par les mêmes convoyeurs et le même chariot mobile que ceux utilisés pour la fourniture de produits.

Par exemple, la fourniture de produits en vue de leur emballage et leur expédition a lieu de jour et la remise en place de produits pour la journée suivante est réalisée de nuit.

Selon un deuxième aspect, la présente invention vise un procédé de fourniture de produits présents dans des bacs, dans un magasin qui comporte :
- au moins deux supports fixes horizontaux de retenue en position d'une pluralité de bacs, chaque support fixe horizontal étant à une hauteur dite « de support fixe »,
- au moins un convoyeur configuré pour supporter au moins un bac en mouvement horizontal, chaque convoyeur étant positionné à une hauteur de convoyage différente de chaque hauteur de support fixe, au moins un convoyeur étant positionné entre deux supports fixes horizontaux et
- au moins un chariot mobile muni d'une tête de préhension et d'un moteur de mise en déplacement de la tête de préhension,
le procédé comportant, effectuées par le chariot mobile :
- une étape de prise d'un bac unique sur un support de bac,
- une étape de déplacement vertical du bac pris, jusqu'à une hauteur de convoyage et
- une étape de liaison mécanique entre le bac et le convoyeur placé à cette hauteur de convoyage.

Les avantages, buts et caractéristiques de ce procédé étant similaires à ceux du magasin objet de l'invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du magasin et du procédé objets de la présente invention, en regard des dessins annexés, dans lesquels :
- la figure 1 représente, en élévation partielle, de face, un premier mode de réalisation particulier du magasin objet de l'invention,
- la figure 2 représente, en élévation partielle, de côté, le magasin illustré en figure 1,
- la figure 3 représente, en vue de dessus partielle, le magasin illustré en figures 1 et 2,
- la figure 4 représente, en élévation partielle, de côté, des bacs, des supports de bacs et des convoyeurs de transport des bacs du magasin illustré en figures 1 à 3,
- la figure 5 est une vue partielle agrandie de la figure 4,
- la figure 6 est une vue en perspective partielle du magasin illustré en figures 1 à 5,
- la figure 7 est une vue partielle agrandie de la figure 6,
- la figure 8 est une vue en perspective partielle d'un bac positionné sur un convoyeur,
- la figure 9 est une vue partielle agrandie de la figure 8,
- la figure 10 est une vue en élévation partielle, de côté, du magasin lors d'une première étape de déplacement d'un bac depuis un support fixe vers un convoyeur,
- la figure 11 est une vue en élévation partielle, de côté, du magasin lors d'une deuxième étape de déplacement d'un bac depuis un support fixe vers un convoyeur,
- la figure 12 est une vue en élévation partielle, de côté, du magasin lors d'une troisième étape de déplacement d'un bac depuis un support fixe vers un convoyeur,
- la figure 13 est une vue en élévation partielle, de côté, du magasin lors d'une quatrième étape de déplacement d'un bac depuis un support fixe vers un convoyeur,
- la figure 14 est une vue en élévation partielle, de côté, du magasin lors d'une cinquième étape de déplacement d'un bac depuis un support fixe vers un convoyeur,
- la figure 15 est une vue en élévation partielle, de côté, du magasin lors d'une sixième étape de déplacement d'un bac depuis un support fixe vers un convoyeur,
- la figure 16 est une vue en élévation partielle, de côté, du magasin lors d'une septième étape de déplacement d'un bac depuis un support fixe vers un convoyeur,
- la figure 17 est une vue en élévation partielle, de côté, du magasin lors d'une huitième étape de déplacement d'un bac depuis un support fixe vers un convoyeur,
- la figure 18 est une vue de côté d'un chariot mobile du magasin illustré en figures 1 à 17,
- la figure 19 est une vue de face du chariot mobile illustré en figure 18,
- la figure 20 est une vue de dessus du chariot mobile illustré en figures 18 et 19,
- la figure 21 est une vue de côté d'une pièce formant support,
- la figure 22 représente, en élévation partielle, de côté, un deuxième mode de réalisation d'un magasin objet de l'invention,
- la figure 23 représente, en vue en coupe, une tourelle de prise de bacs du magasin illustré en figure 22 et
- la figure 24 représente, sous forme d'un logigramme, des étapes de fourniture de produits par un magasin objet de l'invention.

### DESCRIPTION DES MODES DE REALISATION

La présente description est donnée à titre non limitatif, chaque caractéristique d'un mode de réalisation pouvant être combinée à toute autre caractéristique de tout autre mode de réalisation de manière avantageuse.

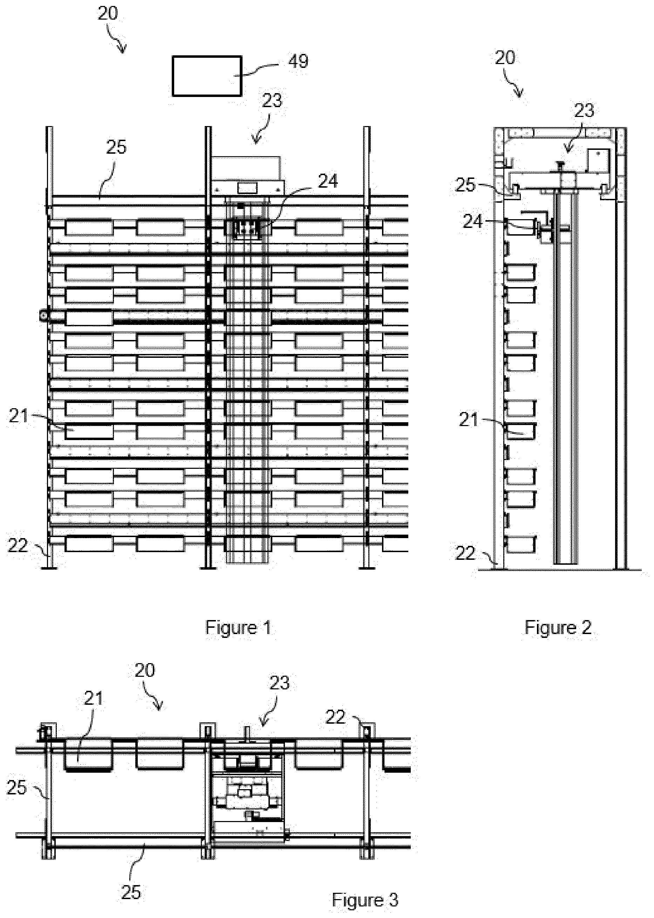

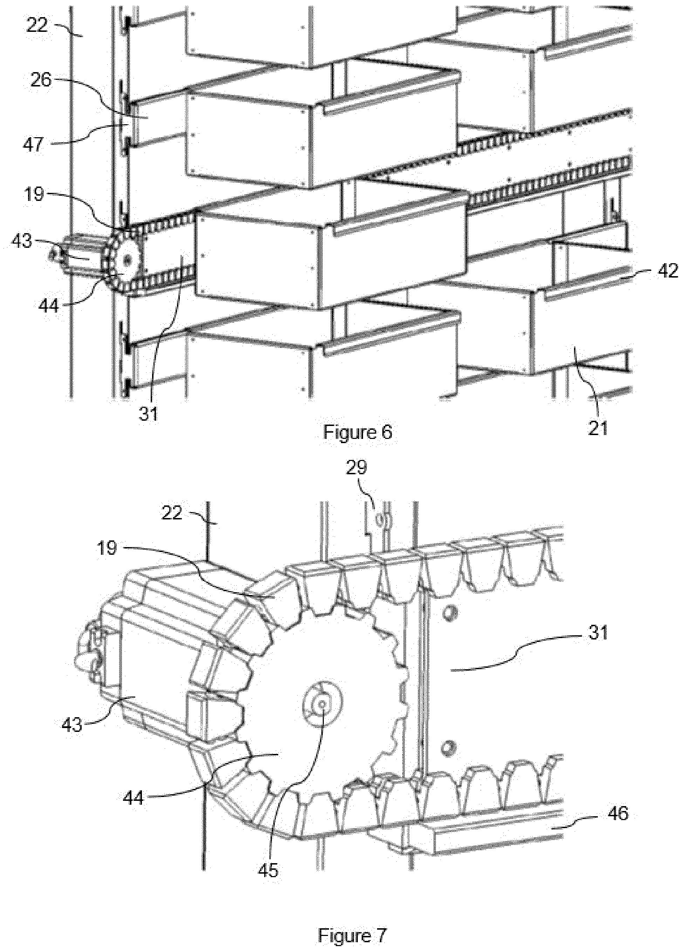

On note, dès à présent, que les figures 1 à 21 sont, chacune, à l'échelle et que les échelles des différentes figures peuvent être différentes.

Dans toute la description, on appelle « supérieur » ou « haut » ce qui est en haut ou orienté vers le haut, sur les figures 1, 2, 4 à 19 et 21, figures qui correspondent à la configuration d'utilisation normale du magasin. On appelle « inférieur » ou « bas », ce qui est en bas ou orienté vers le bas, dans ces figures. Les notions de verticale et horizontale découlent de ces définitions. On appelle « interne » ce qui proche dans ou orienté vers le centre du volume convexe défini par le magasin et, externe, ce qui est à l'extérieur de ce volume ou orienté vers l'extérieur de ce volume. On appelle longueur du magasin sa plus grande dimension horizontale, le long de l'horizontale en figures 1 et 3, et largeur sa plus petite dimension horizontale qui correspond à l'horizontale en figure 2. On appelle vue de face, les vues dans lesquelles la longueur du magasin est en horizontal et la hauteur du magasin en vertical. On appelle vue de côté, les vues dans lesquelles la largeur du magasin est en horizontal et la hauteur du magasin en vertical. On appelle vue de dessus, les vues dans lesquelles la longueur du magasin est en horizontal et la largeur du magasin en vertical.

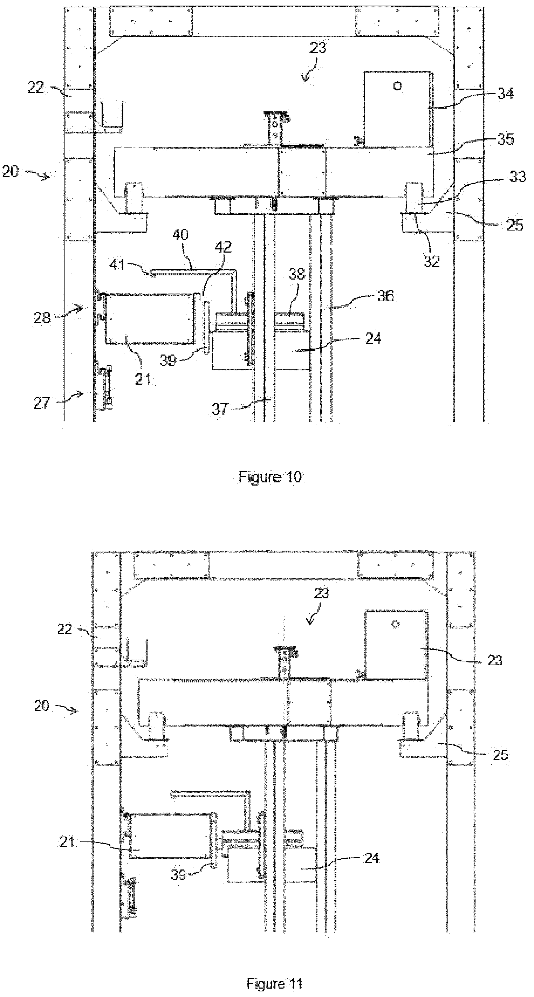

On observe, en figures 1 à 3, un magasin 20 supportant et déplaçant des bacs 21 ouverts sur le dessus et renfermant des produits. Le magasin 20 présente une ossature porteuse comportant des montants 22 et des longerons 25. Un chariot mobile 23 se déplace en translation dans la longueur du magasin 20 sur des longerons 25 dont les surfaces supérieures 32 forment des rails, le chariot mobile 23 étant muni de roulettes 33 (voir figure 10). Le chariot mobile est muni d'une tête de préhension 39.

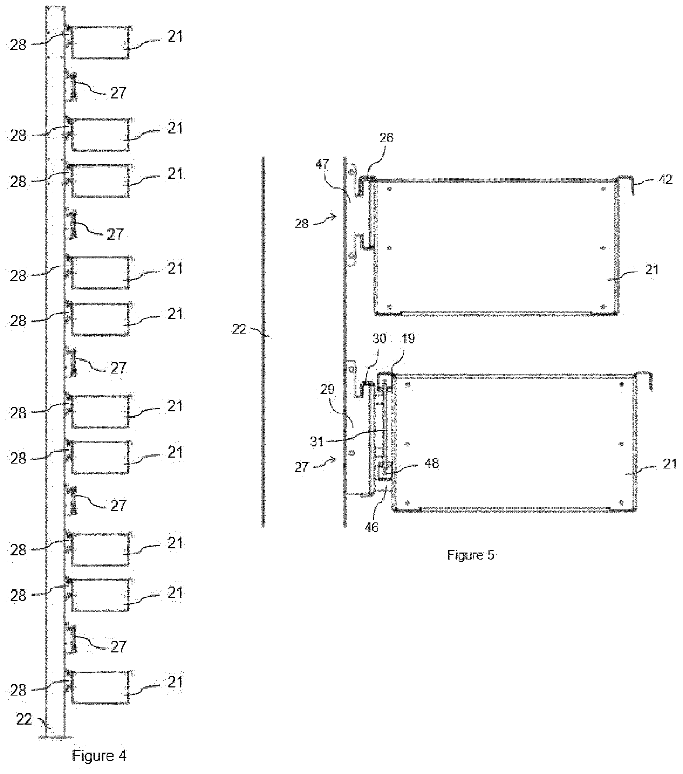

On observe, en figures 4 et 5, que les montants 22 portent des supports fixes horizontaux 28 de bacs 21 et des convoyeurs horizontaux 27 pour convoyer des bacs 21 dans la longueur du magasin 20. Préférentiellement, chaque convoyeur horizontal 27 est entouré de deux supports horizontaux fixes 28, comme illustré en figure 4. Comme illustré en figure 4, préférentiellement, le magasin 20 comporte au moins deux convoyeurs horizontaux 27. Ainsi, préférentiellement, le magasin 20 comporte, entre deux convoyeurs horizontaux 27 successifs, deux supports fixes 28.

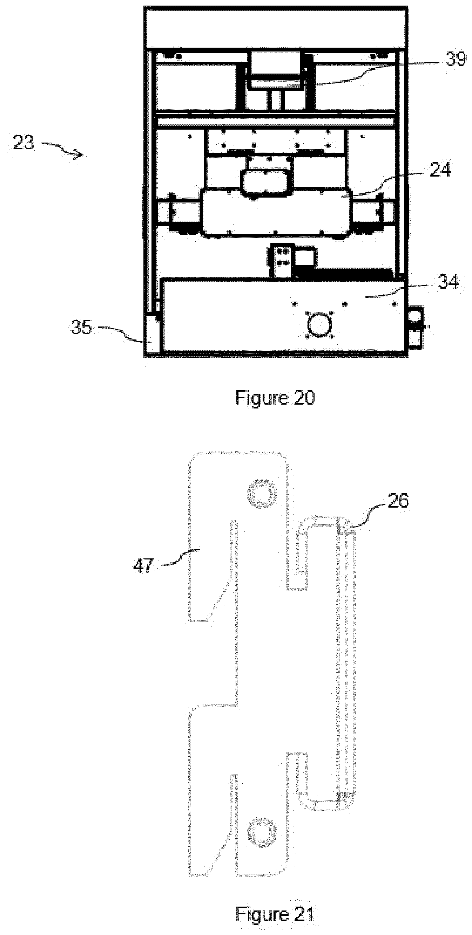

Comme illustré en figures 5 et 21, chaque support horizontal 28 comporte des pièces planes 47 munies de dents s'encastrant dans des fentes verticales formant crémaillère dans les montants 22 et une traverse 26, qui s'étend sur toute la longueur du magasin, supportée par ces pièces 47.

Comme illustré en figure 5, chaque bac 21 présente, du côté support et convoyeur, d'une part, et du côté chariot, d'autre part, un bord 42 replié vers le bas formant un volume ouvert. Du côté support et convoyeur, ce bord 42 replié assure le maintien gravitaire du bac 21 sur un support fixe 28 ou sur un convoyeur 27.

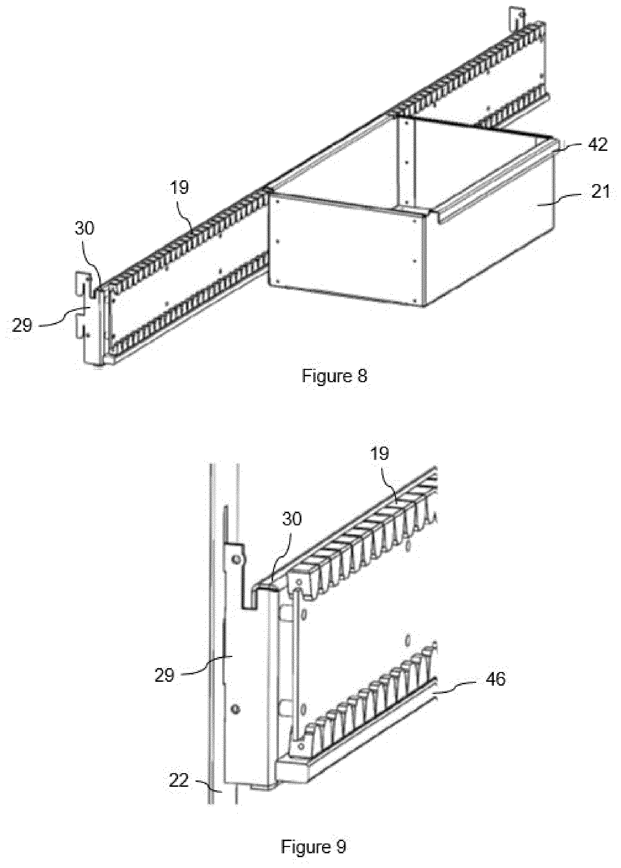

Comme illustré en figures 5 à 9, chaque convoyeur horizontal 27 comporte des pièces planes 29 munies de dents (voir particulièrement les figures 8 et 9) s'encastrant dans des fentes verticales formant crémaillère dans les montants 22 et une traverse 30, qui s'étend sur toute la longueur du magasin, supporté par ces pièces 29. Chaque traverse 30 supporte une plaque plane verticale 31 sur laquelle coulisse une courroie crantée 19. Cette courroie crantée 19, ou chaîne, comporte des maillons venant à cheval sur le bord de la plaque plane verticale 31. La courroie crantée 19 est tendue par un câble 48 (figure 5) interne aux maillons.

En extrémité de convoyeur 27, un pignon cranté 44 accouplé à un arbre de sortie 45 d'un moteur rotatif 43 entraîne la courroie crantée 19. Un patin 46 porté par la traverse 30 assure le guidage et le glissement des bacs 21 lors de leur déplacement sous l'action du convoyeur 27.

Toutes les courroies 19 des convoyeurs tournent dans le même sens, si bien que tous les bacs 21 véhiculés par des convoyeurs sont emmenés à la même extrémité du magasin 20. Dans des modes de réalisation non représentés, le magasin 20 comporte un bras motorisé à cette extrémité, ce bras motorisé étant configuré pour prendre chaque bac 21 sur chaque convoyeur 27 et pour lier ce bac 21 à un convoyeur secondaire afin de le mettre à disposition d'un opérateur ou de machines de traitement, d'usine ou de montage. Par exemple, pour des raisons de rapidité, le bras motorisé effectue une rotation de chaque bac 21, par rapport à un axe de rotation vertical, et éventuellement, une translation verticale, entre le convoyeur où ce bac 21 se trouve initialement jusqu'au convoyeur secondaire. Dans des modes de réalisation non représentés, le magasin 20 comporte, de plus, un convoyeur de reprise de bacs 21 vides jusqu'à une zone de stockage de bacs vides.

On va maintenant décrire le chariot mobile 23 en regard des figures 10, 18 et 19.

Le chariot mobile 23 comporte, en partie supérieure, un moteur 34 monté sur un bâti 35 muni des roulettes 33 qui roulent sur les rails 32. Le bâti 35 supporte une colonne 36, du côté opposé aux bacs 21 et deux colonnes 37 du côté des bacs 21. Sur ces trois colonnes 36 et 37, se déplace verticalement une tourelle de prise de bacs 24, qui supporte un vérin horizontal 38 mettant en déplacement la tête de préhension 39. La tête de préhension 39 a une forme rectangulaire verticale, d'épaisseur inférieure à la largeur du bord replié 42 des bacs 21, de hauteur sensiblement égale à la hauteur des bacs 21 et de longueur sensiblement égale à celle des bacs 21. La tourelle 24 comporte aussi un support 40 d'une caméra 41 configurée pour prendre une image de l'ensemble du contenu d'un bac 21.

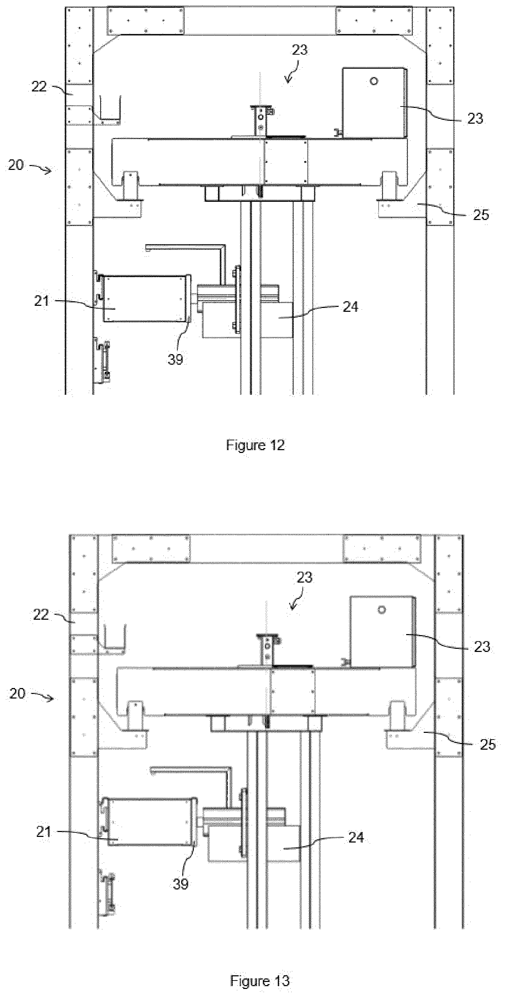

Pour déplacer un bac 21 depuis un support 28 jusqu'à un convoyeur 27, la tourelle 24 est, d'abord positionnée verticalement pour que la tête de préhension 39 soit intégralement en dessous de l'ouverture du bord replié 42 interne de ce bac 21, comme illustré en figure 10. Puis le vérin 38 déplace la tête de préhension 39 pour la positionner en dessous du bord replié interne 42, comme illustré en figure 11. Ensuite, la tourelle 24 remonte pour engager la tête de préhension 39 dans le bord replié interne 42, comme illustré en figure 12, puis pour désengager le bord replié 42 externe, opposé à la tête de préhension 39, du support 28, comme illustré en figure 13.

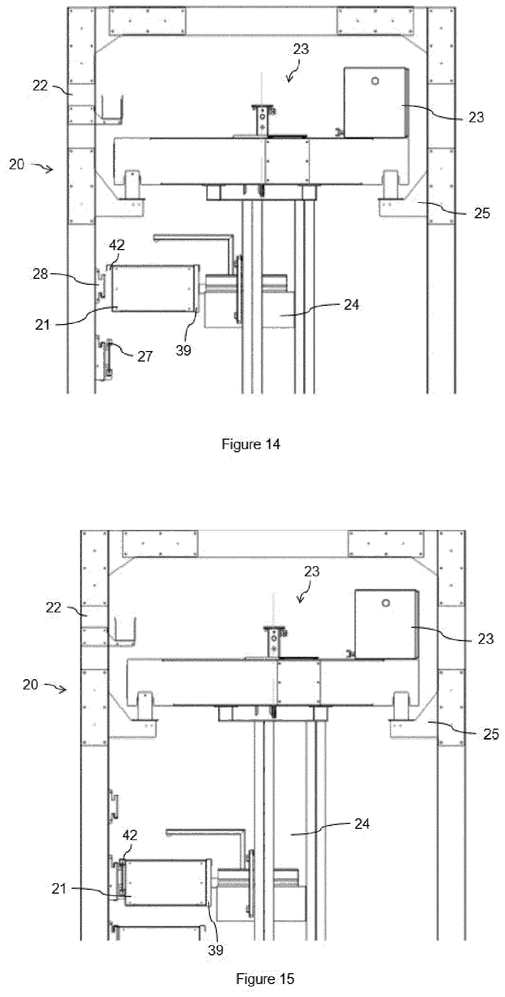

Le vérin 38 est alors rétracté pour rapprocher le bac 21 de la tourelle 24, comme illustré en figure 14. La tourelle 24 est ensuite déplacée verticalement, vers le bas en figure 14 ou vers le haut quand le bac 21 doit être positionné sur le convoyeur 27 situé au-dessus du support 28 qui supportait précédemment ce bac 21.

Si le bord replié externe 42 n'est pas alors au-dessus de la courroie crantée 19, le vérin 38 est actionné pour l'y mettre. La tourelle 24 est alors descendue, d'abord pour engager le bord replié externe 42 du bac 21 dans la courroie crantée 19 puis pour dégager la tête de préhension 39 du bord replié interne 42. Enfin, le vérin 38 est rétracté. Le chariot 23 est déplacé, dans la longueur du magasin et la tourelle 24 est déplacée dans la hauteur du magasin pour positionner la tête de préhension 39 en regard d'un autre bac 21 à positionner sur un convoyeur 27.

Pour séquencer les opérations des différents organes du magasin 20, celui-ci comporte un moyen 49 de commande (voir figure 1) de ces organes. Le moyen de commande 49 comporte, par exemple, un ordinateur et/ou un serveur accédant et éditant des bases de données de produits disposés dans les différents bacs 21. Le moyen de commande 49 détermine notamment le trajet du chariot mobile parallèlement au plan des supports fixes en fonction des bacs à faire sortir. Préférentiellement, le moyen de commande 49, détermine le chemin à faire suivre par le chariot mobile pour que ce chemin longe successivement les différents supports fixes portant lesdits bacs à faire sortir. Par exemple, s'il y a trois bacs 21 à prendre sur le support fixe 28 le plus élevé et à disposer sur le convoyeur 27 le plus élevé et deux bacs 21 à prendre sur le quatrième support fixe 28 le plus élevé et à disposer sur le deuxième convoyeur 27 le plus élevé, le chariot 23 traite d'abord les trois premiers, qui sont sur le même support 28, puis les deux derniers. Préférentiellement, ce chemin parcourt, dans l'ordre, les supports de haut en bas ou de bas en haut. Préférentiellement, le moyen de traitement 49 détermine la position de tous les bacs 21 véhiculés par des convoyeurs 27 et positionne un nouveau bac 21 sur un convoyeur 27 que si la trajectoire de ce nouveau bac 21 ne risque pas croiser la trajectoire d'un bac 21 déjà présent sur le convoyeur 27 considéré.

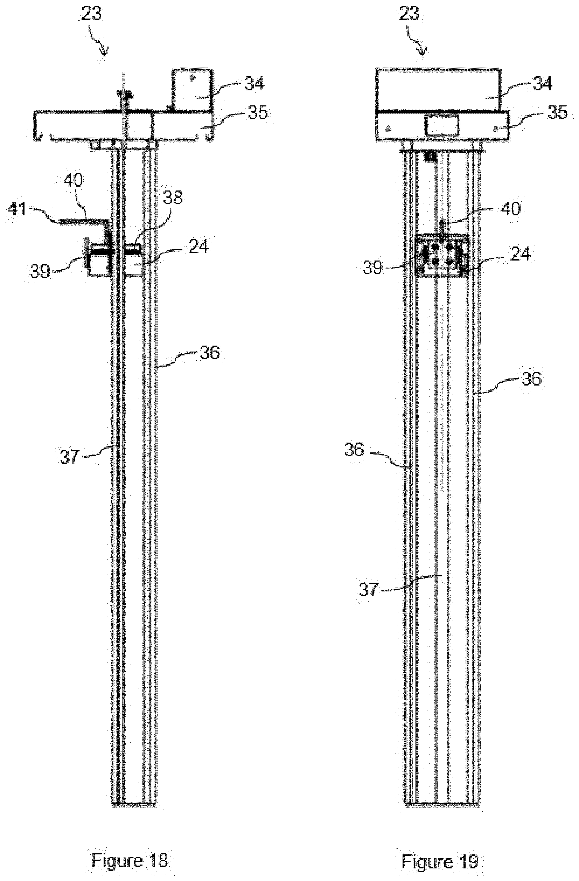

Comme illustré en figures 10 et 18, le chariot mobile 23 comporte un moyen de reconnaissance automatique d'au moins un produit présent dans un bac 21. Ce moyen de reconnaissance comporte, dans le mode de réalisation représenté, la caméra 41 associée à un logiciel de reconnaissance de formes, d'écritures et/ou de codes. Le traitement des images fournies par la caméra 41 peut comporter le repérage, en deux ou trois dimensions, de la position d'un produit dans un casier. Cette position peut ensuite être utilisée par un organe de préhension (« picking ») pour saisir le produit.

Alternativement ou en complément, ce moyen de reconnaissance comporte un organe de pesée (non représenté) intégré au chariot 23, dont la précision est plus fine que le poids unitaire du produit le plus léger dans le magasin.

On réalise ainsi un contrôle de stock automatique pondéral à chaque sortie de casier, avec une mémorisation d'un nombre de produits et/ou une mémorisation du poids résiduel des produits dans le casier.

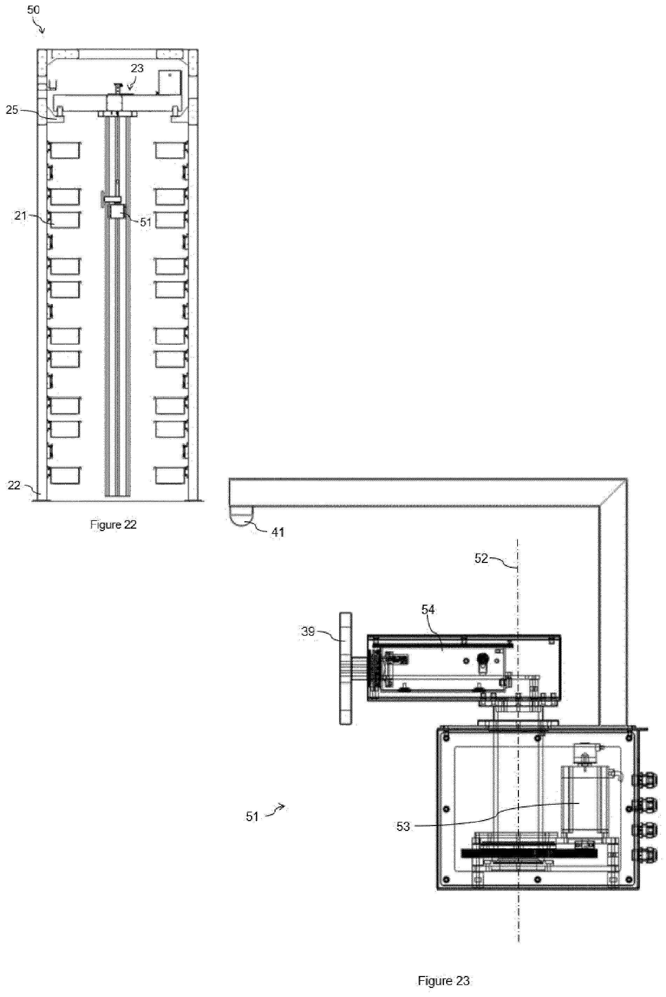

Dans le deuxième mode de réalisation d'un magasin 50 objet de l'invention illustré en figure 22, on retrouve les éléments du premier mode de réalisation 20. Le magasin 50 comporte des rangées de bacs 21 et des convoyeurs de part et d'autre du plan de déplacement de la tourelle 51. Comme illustré en figure 23, la tourelle 51 présente un degré de liberté supplémentaire, par rapport à la tourelle 24 puisqu'elle effectue les rotations autour d'un axe de rotation verticale 52 afin de saisir des bacs 21 de chaque côté de son plan de déplacement vertical. Un moteur 53 met en rotation la tête de préhension 39. La tourelle 51 incorpore une balance de précision 54 pour effectuer la vérification pondérale du poids de chaque bac 21 et la mémorisation du stock de produits disponible dans les bacs 21. Préférentiellement, la caméra 41 est montée sur la tête de préhension 39 pour tourner avec elle.

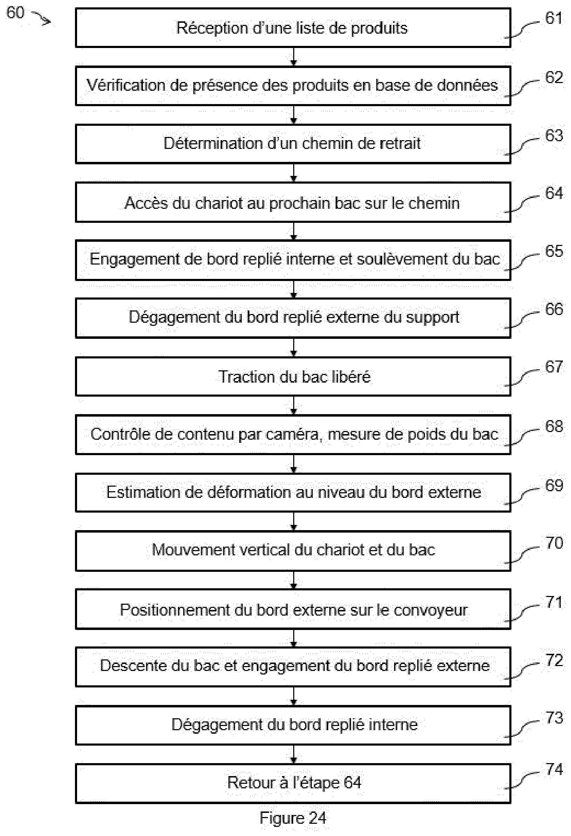

Le procédé de fourniture de produits présents dans des bacs 21, est illustré, dans l'un de ses modes de réalisation 60, en figure 24.

Au cours d'une étape 61, le moyen de commande 49 reçoit une liste de produits à faire fournir en sortie par le magasin 20.

Au cours d'une étape 62, le moyen de commande 49 vérifie, en accédant à une base de données, la présence des produits dans le magasin 20 et en détermine la position des bacs 21 qui comportent ces produits. En cas d'absence d'un produit dans le magasin 20, le moyen de commande 49 retourne un message aux moyens de gestion des stocks et des commandes.

Au cours d'une étape 63, le moyen de commande 49 détermine le chemin le plus rapide entre les bacs 21 comportant les produits à fournir. Dans le cas où le même produit se trouve dans plusieurs bacs 21, le moyen de commande 49 choisit parmi ces bacs celui qui optimise la vitesse de fourniture. Dans le cas où le nombre de produits identiques à fournir impose de faire sortir plus d'un bac 21 comportant de tels produits, le moyen de commande 49 optimise le choix des bacs en fonction de la rapidité de fourniture ou pour maximiser le nombre de bacs 21 restant disponibles, après fourniture des produits, dans le magasin 20.

Au cours d'une étape 64, le moyen de commande 49 commande le positionnement du chariot 23 en face du prochain bac 21 à faire sortir (voir figure 10).

Au cours d'une étape 65, le moyen de commande 49 commande la montée de la tête de préhension 39 et l'engagement du bord replié interne 42 du bac 21 par la tête de préhension 39 (voir figures 11 et 12).

Au cours d'une étape 66, le moyen de commande 49 commande la montée de la tête de préhension 39, le soulèvement du bac 21 et le désengagement de son bord replié externe 42 du support 28 qui le portait (voir figure 13). On note que les étapes 65 et 66 se font d'un seul mouvement continu et uniforme de la tête de préhension 39.

Au cours d'une étape 67, le moyen de commande 49 commande la traction du bac 21 vers l'intérieur du magasin (voir figure 14).

Au cours d'une étape 68, le moyen de commande 49 effectue, avec la caméra 41, le contrôle de la présence du produit à fournir devant se trouver dans le bac 21 et le contenu du bac 21 porté par le chariot 23. Optionnellement, le moyen de commande 49 effectue, avec un organe de pesée (non représenté) intégré au chariot 23, la pesée du contenu du bac 21 pour déterminer le nombre de produits présents dans le bac 21.

Au cours d'une étape 69 optionnelle, le moyen de commande 49 effectue une estimation de la déformation mécanique du bac 21 sous l'effet du poids de son contenu. Cette déformation correspond à un décalage vers le bas, du bord externe replié 42 du bac 21.

Alternativement, notamment si le chariot 42 ne comporte pas d'organe de pesée, le moyen de commande 49 détermine cette déformation avec la caméra 41, par exemple en lui adjoignant une source de lumière pulsée pour n'être lumineuse que pour une partie des images prises par la caméra 41, par exemple une diode électroluminescente (non représenté), et en déterminant la position su reflet de la lumière émise par cette source lumineuse, sur les bords du bac 21 parallèles à la largeur du magasin 20. Il s'agit des bords du bac 21 allant du bord replié interne 42 au bord replié externe 42.

Au cours d'une étape 70, le moyen de commande 49 commande le déplacement vertical du bac 21, jusqu'à une hauteur de convoyage dans laquelle le bord replié externe 42 du bac 21 est à une hauteur légèrement supérieure, par exemple d'un centimètre, à la hauteur de la partie supérieure de la courroie crantée 19 du convoyeur 27 le plus proche du support 28 où le bac 21 a été pris.

Au cours d'une étape 71, le moyen de commande 49 commande le positionnement du bord replié externe 42 du bac 21 porté par le chariot 23 au-dessus de la courroie crantée 19 de ce convoyeur 27 (voir figure 15). Bien entendu, le mouvement vertical de l'étape 70 et le mouvement horizontal de l'étape 71 peuvent être combinés en une seule trajectoire continue.

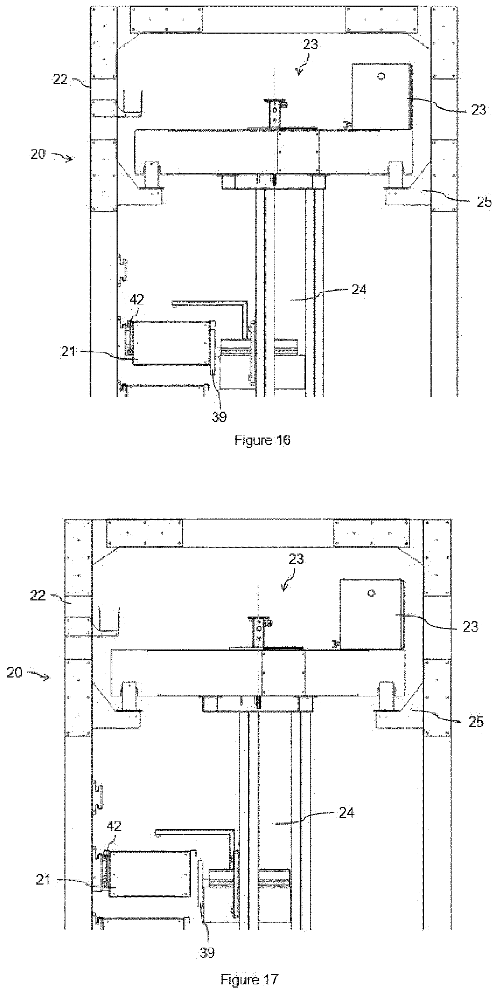

Au cours d'une étape 72, le moyen de commande 49 commande la descente de la tête de préhension 39 et l'engagement du bord replié externe 42 du bac 21 sur la courroie crantée 19 (voir figure 16).

Au cours d'une étape 73, le moyen de commande 49 commande la descente de la tête de préhension 39 et le désengagement du bord interne 42 du bac 21 de la tête de préhension 39 (voir figure 17). On note que les étapes 62 et 63 se font d'un seul mouvement continu et uniforme de la tête de préhension.

Au cours d'une étape 74, si le chemin n'a pas été entièrement parcouru, on retourne à l'étape 64 pour le bac 21 suivant sur le chemin du chariot 23. Parallèlement, le moyen de commande 49 effectue l'enregistrement, en base de données, des bacs 21 et des produits sortis du magasin 20.

## Revendications

1. Magasin automatique robotisé (20), **caractérisé en ce qu'**il comporte :
- au moins deux supports fixes horizontaux (28) de retenue en position d'une pluralité de bacs (21) comportant des produits à délivrer, chaque support fixe horizontal étant à une hauteur dite « de support fixe »,
- au moins un convoyeur (27) configuré pour supporter au moins un bac en mouvement horizontal, chaque convoyeur étant positionné à une hauteur de convoyage différente de chaque hauteur de support fixe, et
- au moins un chariot mobile (23) muni d'une tête de préhension (39) et d'un moteur (34, 38) de mise en déplacement de la tête de préhension, configurée pour prendre un bac unique sur un support de bac, le déplacer verticalement jusqu'à une hauteur de convoyage et lier mécaniquement le bac déplacé au convoyeur placé à cette hauteur de convoyage, **caractérisé en ce que** le magasin automatique robotisé comporte au moins un convoyeur positionné entre deux supports fixes horizontaux.

2. Magasin (20) selon la revendication 1, dans lequel au moins un bac (21) présente, du côté tourné vers le la tête de préhension (39), un bord (42) replié vers le bas formant un volume ouvert, et la tête de préhension comporte un support de bac présentant une partie supérieure configurée pour pénétrer dans le repliement de ce bord du bac.

3. Magasin (20) selon l'une des revendications 1 ou 2, dans lequel au moins un bac (21) présente, du côté tourné vers le support fixe (28), un bord (42) replié vers le bas formant un volume ouvert, et le support fixe comporte une traverse (26) présentant une partie supérieure configurée pour pénétrer dans le repliement de ce bord du bac.

4. Magasin (20) selon l'une des revendications 1 à 3, qui comporte au moins deux convoyeurs horizontaux (27) et, entre deux convoyeurs successifs, deux supports fixes (28), chaque convoyeur horizontal étant entouré, au-dessus et en dessous, par deux supports fixes.

5. Magasin (20) selon l'une des revendications 1 à 4, qui comporte un bras motorisé à l'extrémité de chaque convoyeur (27) où le convoyeur amène chaque bac (21), le bras motorisé étant configuré pour prendre chaque bac sur chaque convoyeur pour lier ce bac à un convoyeur secondaire.

6. Magasin (20) selon la revendication 5, dans lequel le bras motorisé effectue une rotation de chaque bac.

7. Magasin (20) selon l'une des revendications 1 à 6, qui comporte un moyen de commande (49) du trajet du chariot mobile (23) parallèlement au plan des supports fixes (28), pour, en fonction des bacs (21) à faire sortir, déterminer un chemin suivi par le chariot mobile, ledit chemin suivant successivement les différents supports fixes portant lesdits bacs à faire sortir.

8. Magasin (20) selon l'une des revendications 1 à 7, dans lequel le chariot mobile (23) comporte un moyen de reconnaissance automatique d'au moins un produit présent dans un bac (21).

9. Magasin (20) selon l'une des revendications 1 à 8, dans lequel le chariot mobile (23) comporte un organe de pesée dont la précision est plus fine que le poids unitaire du produit le plus léger dans le magasin.

10. Magasin (20) selon l'une des revendications 1 à 9, qui comporte, de plus, un convoyeur de reprise de bacs vides jusqu'à une zone de stockage de bacs vides.

11. Procédé (60) de fourniture de produits présents dans des bacs (21), dans un magasin (20) qui comporte :
- au moins deux supports fixes horizontaux (28) de retenue en position d'une pluralité de bacs, chaque support fixe horizontal étant à une hauteur dite « de support fixe »,
- au moins un convoyeur (27) configuré pour supporter au moins un bac en mouvement horizontal, chaque convoyeur étant positionné à une hauteur de convoyage différente de chaque hauteur de support fixe, au moins un convoyeur étant positionné entre deux supports fixes horizontaux et
- au moins un chariot mobile (23) muni d'une tête de préhension (39) et d'un moteur (34, 38) de mise en déplacement de la tête de préhension,
procédé **caractérisé en ce qu'**il comporte, effectuées par le chariot mobile :
- une étape (64 à 67) de prise d'un bac unique sur un support de bac,
- une étape (70) de déplacement vertical du bac pris, jusqu'à une hauteur de convoyage et
- une étape (71, 72, 73) de liaison mécanique entre le bac et le convoyeur placé à cette hauteur de convoyage.

## Patentansprüche

1. Automatisches Robotermagazin (20), **dadurch gekennzeichnet, dass** es aufweist:
- mindestens zwei horizontale feste Stützen (28) zum Halten einer Vielzahl von Behältern (21) mit zu liefernden Produkten in Position, wobei jede horizontale feste Stütze auf einer sogenannten "festen Stützenhöhe" steht,
- wenigstens ein Förderband (27), das ausgelegt ist, um wenigstens einen Behälter in horizontaler Bewegung zu tragen, wobei jedes Förderband auf einer Förderhöhe positioniert ist, die sich von jeder festen Stützenhöhe unterscheidet, und
- wenigstens einen beweglichen Wagen (23) mit einem Greifkopf (39) und einem Motor (34, 38) zur Bewegung des Greifkopfs, der ausgelegt ist, um einen einzelnen Behälter auf einem Behälterträger aufzunehmen, ihn vertikal bis zu einer Förderhöhe zu bewegen und den bewegten Behälter mechanisch mit dem in dieser Förderhöhe platzierten Förderband zu verbinden, **dadurch gekennzeichnet, dass** das automatische Robotermagazin wenigstens ein Förderband aufweist, das zwischen zwei horizontalen festen Stützen positioniert ist.

2. Magazin (20) nach Anspruch 1, wobei mindestens ein Behälter (21) auf der dem Greifkopf (39) zugewandten Seite einen nach unten gefalteten Rand (42) aufweist, der ein offenes Volumen bildet, und der Greifkopf eine Behälterstütze aufweist, die einen oberen Teil aufweist, der ausgelegt ist, um in die Faltung dieses Randes des Behälters einzudringen.

3. Magazin (20) nach einem der Ansprüche 1 oder 2, wobei mindestens ein Behälter (21) auf der der festen Stütze (28) zugewandten Seite einen nach unten gefalteten Rand (42) aufweist, der ein offenes Volumen bildet, und die feste Stütze einen Querträger (26) aufweist, der einen oberen Teil aufweist, der ausgelegt ist, um in die Faltung dieses Randes des Behälters einzudringen.

4. Magazin (20) nach einem der Ansprüche 1 bis 3, das wenigstens zwei horizontale Förderbänder (27) und zwischen zwei aufeinanderfolgenden Förderbändern zwei feste Stützen (28) aufweist, wobei jedes horizontale Förderband oben und unten von zwei festen Stützen umgeben ist.

5. Magazin (20) nach einem der Ansprüche 1 bis 4, das einen motorisierten Arm am Ende jedes Förderbands (27) aufweist, wo das Förderband jeden Behälter (21) zuführt, wobei der motorisierte Arm ausgelegt ist, um jeden Behälter auf jedem Förderband aufzunehmen, um diesen Behälter mit einem sekundären Förderband zu verbinden.

6. Magazin (20) nach Anspruch 5, wobei der motorisierte Arm jeden Behälter dreht.

7. Magazin (20) nach einem der Ansprüche 1 bis 6, das ein Steuermittel (49) für den Weg des beweglichen Wagens (23) parallel zur Ebene der festen Stützen (28) umfasst, um in Abhängigkeit von den herauszuführenden Behältern (21) einen Weg zu bestimmen, der von dem beweglichen Wagen zu nehmen ist, wobei der Weg nacheinander den verschiedenen festen Stützen folgt, die die herauszuführenden Behälter tragen.

8. Magazin (20) nach einem der Ansprüche 1 bis 7, wobei der bewegliche Wagen (23) ein automatisches Erkennungsmittel für wenigstens ein in einem Behälter (21) vorhandenes Produkt aufweist.

9. Magazin (20) nach einem der Ansprüche 1 bis 8, wobei der bewegliche Wagen (23) ein Wiegeorgan aufweist, dessen Genauigkeit genauer ist als das Stückgewicht des leichtesten Produkts im Magazin.

10. Magazin (20) nach einem der Ansprüche 1 bis 9, das ferner ein Leerbehälter-Rücknahmeförderband bis zu einem Leerbehälter-Lagerbereich umfasst.

11. Verfahren (60) zur Bereitstellung von Produkten in Behältern (21) in einem Magazin (20), das aufweist:
- mindestens zwei horizontale feste Stützen (28) zum Halten einer Vielzahl von Behältern in Position, wobei jede horizontale feste Stütze auf einer sogenannten "festen Stützenhöhe" steht,
- wenigstens ein Förderband (27), das ausgelegt ist, um wenigstens einen Behälter in horizontaler Bewegung zu tragen, wobei jedes Förderband auf einer Förderhöhe positioniert ist, die sich von jeder festen Stützenhöhe unterscheidet, wobei wenigstens ein Förderband zwischen zwei festen horizontalen Stützen positioniert ist, und
- wenigstens einen beweglichen Wagen (23) mit einem Greifkopf (39) und einem Motor (34, 38) zur Bewegung des Greifkopfs,
wobei das Verfahren **dadurch gekennzeichnet ist, dass** es aufweist, durchgeführt von dem beweglichen Wagen:
- einen Schritt (64 bis 67) des Aufnehmens eines einzelnen Behälters auf eine Behälterstütze,
- einen Schritt (70) des vertikalen Verfahrens des aufgenommenen Behälters bis zu einer Förderhöhe und
- einen Schritt (71, 72, 73) der mechanischen Verbindung zwischen dem Behälter und dem Förderband, das sich in dieser Förderhöhe befindet.

## Claims

1. Robotised automated warehouse (20), **characterised in that** it comprises:
- at least two horizontal fixed supports (28) for holding in position a plurality of bins (21) comprising products to be delivered, each horizontal fixed support being at a height referred to as "fixed support height";
- at least one conveyor (27) configured to support at least one bin in horizontal movement, each conveyor being positioned at a conveying height different from each fixed support height; and
- at least one mobile carriage (23) equipped with a picking head (39) and a motor (34, 38) for moving the picking head, configured to pick up a single bin on a bin support, move it vertically up to a conveying height and mechanically connect the moved bin to the conveyor placed at this conveying height, **characterised in that** the robotised automated warehouse comprises at least one conveyor positioned between two horizontal fixed supports.

2. Warehouse (20) according to claim 1, wherein at least one bin (21) has, on the side facing the picking head (39), an edge (42) folded downwards forming an open volume, and the picking head comprises a bin support having an upper portion configured to enter into the fold of this edge of the bin.

3. Warehouse (20) according to one of claims 1 or 2, wherein at least one bin (21) has, on the side facing the fixed support (28), an edge (42) folded downwards forming an open volume, and the fixed support comprises a crossbar (26) having an upper portion configured to enter into the fold of this edge of the bin.

4. Warehouse (20) according to one of claims 1 to 3, which comprises at least two horizontal conveyors (27) and, between two successive conveyors, two fixed supports (28), each horizontal conveyor being encased, above and below, by two fixed supports.

5. Warehouse (20) according to one of claims 1 to 4, which comprises a motorised arm at the end of each conveyor (27) where the conveyor carries each bin (21), the motorised arm being configured to pick up each bin on each conveyor for connecting this bin to a secondary conveyor.

6. Warehouse (20) according to claim 5, wherein the motorised arm rotates each bin.

7. Warehouse (20) according to one of claims 1 to 6, which comprises a means (49) for controlling the path of the mobile carriage (23) parallel to the plane of the fixed supports (28) in order, as a function of the bins (21) to be retrieved, to determine a route followed by the mobile carriage, this route successively following the different fixed supports bearing these bins to be retrieved.

8. Warehouse (20) according to one of claims 1 to 7, wherein the mobile carriage (23) comprises a means for automatically recognising at least one product present in a bin (21).

9. Warehouse (20) according to one of claims 1 to 8, wherein the mobile carriage (23) comprises a weighing device with greater precision than the unit weight of the lightest product in the warehouse.

10. Warehouse (20) according to one of claims 1 to 9, which also comprises a conveyor for taking empty bins to an empty bin storage area.

11. Method (60) for supplying products present in bins (21), in a warehouse (20) which comprises:
- at least two horizontal fixed supports (28) for holding in position a plurality of bins, each horizontal fixed support being at a height referred to as "fixed support height";
- at least one conveyor (27) configured to support at least one bin in horizontal movement, each conveyor being positioned at a conveying height different from each fixed support height, at least one conveyor being positioned between two horizontal fixed supports; and
- at least one mobile carriage (23) equipped with a picking head (39) and a motor (34, 38) for moving the picking head,
which method is **characterised in that** it comprises, carried out by the mobile carriage:
- a step (64 to 67) of picking up a single bin on a bin support;
- a step (70) of moving the picked-up bin vertically, up to a conveying height; and
- a step (71, 72, 73) of mechanical linkage between the bin and the conveyor placed at this conveying height.
